# FASCICULE DE BREVET EUROPEEN

(11) **EP 3 370 901 B1**
(45) Date de publication et mention de la délivrance du brevet: **24.06.2020**
(21) Numéro de dépôt: 16790617.1
(22) Date de dépôt: 03.11.2016
(51) Int. Cl.: B33Y 80/00, B33Y 10/00, B22F 3/105, B22F 5/00, B29C 67/00, B28B 1/00, B28B 7/00, B29D 30/06

(54) **PROCÉDÉ DE FABRICATION ADDITIVE À BASE DE POUDRE D'UNE PIÈCE, NOTAMMENT D'UN ÉLÉMENT DE GARNITURE POUR MOULE DE PNEUMATIQUE**
VERFAHREN ZUR GENERATIVEN FERTIGUNG EINES TEILS, INSBESONDERE EINES VERKLEIDUNGSELEMENT FÜR EINE REIFENFORM, UNTER VERWENDUNG VON PULVER
METHOD FOR ADDITIVE MANUFACTURING OF A PART, IN PARTICULAR A LINING ELEMENT FOR A TYRE MOULD, USING POWDER

(30) Priorité: 06.11.2015 FR 1560655
(43) Date de publication de la demande: 12.09.2018
(73) Titulaire: Compagnie Générale des Etablissements Michelin, 63000 Clermont-Ferrand (FR)
(72) Inventeur: BLANCHET, Etienne, 63040 Clermont-Ferrand Cedex 09 (FR); CALVEL, Romain, 63040 Clermont-Ferrand Cedex 09 (FR); EPARVIER, Florian, 63040 Clermont-Ferrand Cedex 09 (FR)
(74) Mandataire: Roussy, Delphine
(86) Numéro de dépôt international: PCT/EP2016/076582
(87) Numéro de publication internationale: WO 2017/076983

(56) Documents cités:
- WO-A1-2012/131481
- WO-A1-2014/060209
- WO-A1-2014/124969
- WO-A1-2014/124971
- WO-A1-2014/207454
- WO-A1-2015/019070
- US-A1- 2004 031 780
- US-A1- 2013 244 040
- US-A1- 2015 258 609

## Description

La présente invention concerne un procédé de fabrication additive à base de poudre d'une pièce, et notamment d'un élément de garniture. L'élément de garniture est destiné à être utilisé dans un moule de cuisson ou vulcanisation pour pneumatique de véhicule, et notamment dans un moule du type à secteurs.

Un moule à secteurs comprend principalement deux coquilles latérales assurant chacune le moulage d'un des flancs latéraux du pneumatique, et une pluralité de secteurs assurant le moulage de la bande de roulement dudit pneumatique et mobiles radialement entre une position d'ouverture et une position de fermeture du moule. Les coquilles et les secteurs définissent un espace intérieur destiné à être mis en contact avec l'ébauche du pneumatique non vulcanisée.

Pour mouler la bande de roulement du pneumatique, les secteurs du moule comprennent des éléments de garniture. Par « élément de garniture », on entend une partie du moule qui comporte une surface de moulage permettant de mouler au moins une partie de la surface de roulement de cette bande de roulement.

Il est possible de réaliser un élément de garniture par un procédé de fabrication additive à base de poudre par frittage ou par fusion de grains de ladite poudre à l'aide d'un faisceau énergétique. Par « faisceau énergétique », on entend un rayonnement électromagnétique (par exemple un faisceau laser) ou un faisceau de particules (par exemple un faisceau d'électrons).

L'intérêt de la fabrication par fusion sélective de couches de poudre superposées, plus communément nommée frittage, réside principalement dans le fait que la forme de ces éléments de garniture peut être modélisée par ordinateur et que les éléments de garniture peuvent ensuite être fabriqués sur la base de cette modélisation par pilotage du faisceau énergétique par l'ordinateur. Lorsque la fusion sélective est réalisée par un faisceau laser, on parle de frittage laser. La technique de frittage laser consiste à fabriquer la pièce couche après couche, en empilant les couches de poudre consolidées et fusionnées les unes sur les autres par le faisceau laser selon une direction d'empilage.

La demande de brevet FR-A1-3 002 167 (Michelin) décrit un élément de garniture particulier obtenu par cette technique de frittage laser. L'élément de garniture est constitué d'un corps délimitant une surface avant destinée à mouler une partie de la surface de roulement du pneumatique, et de cordons et de lamelles s'étendant en saillie à partir de cette surface de moulage pour former les sculptures de la bande de roulement du pneumatique.

Classiquement, la fabrication d'un tel élément de garniture s'effectue horizontalement sur un plateau de fabrication dédié de sorte à éviter d'avoir une hauteur trop importante et réduire ainsi le temps de fabrication. Afin de soutenir l'élément de garniture lors de sa fabrication, des éléments de support sont formés entre une surface arrière du corps de cet élément de garniture et le plateau de fabrication. Après fabrication, l'élément de garniture est désolidarisé des éléments de support.

Avec un tel type de fabrication horizontale, il est nécessaire de prévoir des opérations d'usinage de la surface arrière de l'élément de garniture destinée à venir en contact avec une partie du moule de cuisson du pneumatique, et ce, afin de supprimer les traces des éléments de support et de garantir les dimensions géométriques souhaitées. Par ailleurs, avec ce type de fabrication, le nombre d'éléments de garniture pouvant être fabriqués sur un même plateau de fabrication est limité.

La demande de brevet WO2014/060209 (Michelin) décrit un élément de garniture du même type que celui décrit dans la demande de brevet précitée.

On comprend donc qu'il existe un besoin de proposer une solution permettant de limiter, voire de supprimer, les opérations d'usinage des pièces après fabrication par frittage laser, et d'augmenter le nombre de pièces pouvant être fabriquées sur un même plateau de fabrication.

L'invention concerne un procédé de fabrication additive d'une pluralité d'éléments de garniture pour moule de pneumatique sur un plateau de fabrication par fusion de poudre à l'aide d'au moins un faisceau énergétique, chaque élément de garniture comprenant au moins deux faces frontales avant et arrière opposées délimitant l'épaisseur dudit élément de garniture et des protubérances s'étendant en saillie par rapport à sa face frontale avant, le procédé comprenant les étapes suivantes:
- a) fabrication simultanée par dépose et fusion sélective de couches de poudre empilées sur le plateau de fabrication d'une pluralité d'ensembles intermédiaires au moins suivant une rangée, chaque ensemble intermédiaire comprenant :
   - un élément de garniture réalisé de façon inclinée par rapport au plateau de fabrication et formant un angle compris entre 20° et 70° avec ledit plateau,
   - un support interposé entre le plateau de fabrication et une base inférieure dudit élément de garniture, et
   - au moins un élément de soutien local en appui contre la face frontale arrière de l'élément de garniture, ledit élément de soutien local dudit ensemble étant disposé et conformé de sorte à éviter tout contact avec les protubérances de l'élément de garniture de l'ensemble intermédiaire adjacent de la rangée,
   - les couches de poudre fusionnée de l'élément de garniture, du support et dudit élément de soutien local étant rendues solidaires les unes des autres lors de cette étape de fabrication,
- b) formation, lors des phases de fusion sélective de l'étape de fabrication, d'amorces de rupture dans des zones de raccordement du support et dudit élément de soutien avec ledit élément de garniture de chaque ensemble intermédiaire,
- c) séparation de l'élément de garniture avec le support et ledit élément de soutien local de chaque ensemble intermédiaire après l'étape de fabrication par cassure desdites zones de raccordement,
- au moins une gorge étant formée localement sur la face frontale arrière de l'élément de garniture de chaque ensemble intermédiaire et/ou sur la base inférieure dudit élément de garniture lors de l'étape de fabrication, la zone de raccordement dudit élément de soutien local avec ledit élément de garniture étant disposée à l'intérieur de ladite gorge.

On entend par « poudre », une poudre ou un mélange de poudres. La poudre peut par exemple être métallique, plastique ou minérale, par exemple céramique.

La réalisation de l'élément de garniture de façon inclinée par rapport au plateau de fabrication permet de pouvoir fabriquer un nombre plus important d'éléments de garniture sur un même plateau de fabrication par rapport à une fabrication de type horizontale. Ainsi, une pluralité d'ensembles intermédiaires peut être fabriquée simultanément sur le plateau de fabrication commun au moins suivant une rangée. En outre, on utilise moins de consommables (plateau, poudre) pour réaliser les éléments de garniture. La fabrication de ces éléments de garniture est alors plus économique.

En outre, avec une inclinaison de l'élément de garniture supérieure ou égale à 20° et inférieure ou égale 70°, et préférentiellement comprise entre 30° et 60°, l'obtention d'un élément de garniture respectant les caractéristiques d'état de surface requises est facilitée. Avec une inclinaison trop faible, par exemple inférieure à 20°, lors de la fabrication de l'élément de garniture, la couche de poudre en cours de fusion repose en trop grande partie sur des zones non fusionnées de la couche de poudre précédente, ce qui génère des aspérités et donc une rugosité plus importante.

En outre, grâce à cette inclinaison prévue, un soutien partiel, et non total, est suffisant pour assurer un bon maintien en position de l'élément de garniture en cours de fabrication. Avec un nombre limité d'éléments de soutien local, on réduit le risque de vibrations et de déformations de l'élément de garniture, notamment par flexion, lors des étapes de fusion des couches successives et également lors du passage du dispositif de mise en couche qui assure la préparation du lit de poudre sur chacune des couches de poudre fusionnées au préalable.

La prévision d'un support relié d'un côté au plateau de fabrication et de l'autre côté à la base inférieure de l'élément de garniture participe également au bon maintien en position de l'élément de garniture lors de la fabrication.

Par ailleurs, après fabrication, ce support intermédiaire facilite la désolidarisation de l'élément de garniture relativement au plateau de fabrication. La séparation de l'élément de garniture avec le support mais également avec ledit élément de soutien local est en outre facilitée par les amorces de rupture créées et qui permettent de réduire localement la tenue mécanique dudit élément de soutien local et du support.

Ces amorces de rupture permettent également de limiter les traces laissées sur l'élément de garniture après cassure et ainsi d'éviter de prévoir des opérations d'usinage ultérieures. Par exemple, lorsque l'élément de garniture peut être directement monté dans le moule suite à l'étape de désolidarisation. Le procédé d'obtention des éléments de garniture est ainsi facilité, car il y a moins d'opérations pré- et post-fabrication (programmation, cycle de chargement, déchargement machine, découpe, usinage).

Les amorces de rupture peuvent par exemple comprendre une diminution locale d'épaisseur desdites zones de raccordement et/ou des cavités locales formées sur lesdites zones.

Les protubérances de l'élément de garniture sont destinées à mouler des découpures dans la bande de roulement du pneumatique. On entend par « découpures » dans la bande de roulement, l'espace délimité par des parois de matière s'étendant à partir de la surface de roulement, se faisant face et distantes l'une de l'autre d'une distance non nulle. Les protubérances peuvent par exemple être des cordons et/ou des lamelles destinés respectivement à former des rainures et/ou des incisions dans la bande de roulement du pneumatique.

Par ailleurs, avec la formation d'au moins une gorge localement sur la face frontale arrière de l'élément de garniture de chaque ensemble intermédiaire lors de l'étape de fabrication, la zone de raccordement dudit élément de soutien local avec ledit élément de garniture est disposée à l'intérieur de ladite gorge. Ainsi, les éventuelles traces laissées sur l'élément de garniture par la désolidarisation de cet élément de soutien sont en retrait de face frontale arrière fonctionnelle de l'élément de garniture.

Dans un mode de mise en œuvre particulier, une partie chanfreinée est ménagée entre la base inférieure de l'élément de garniture de chaque ensemble intermédiaire et sa face frontale arrière, la zone de raccordement du support avec ledit l'élément de garniture étant reliée à la partie chanfreinée. Ainsi, les éventuelles traces laissées sur l'élément de garniture par la désolidarisation du support n'impactent pas son montage ultérieur avec d'autres éléments.

Dans un mode de mise en œuvre, la zone de raccordement du support de chaque ensemble intermédiaire avec ledit élément de garniture et/ou la zone de raccordement dudit élément de soutien avec ledit élément de garniture présentent une densité inférieure à 98%. Ceci permet d'obtenir des zones de raccordement dans lesquelles la poudre a été fusionnée avec des paramètres dégradés, d'où une diminution locale des propriétés mécaniques facilitant la casse et une réduction du temps de fabrication. Les amorces de rupture sont obtenues par une densité réduite.

Comme indiqué précédemment, le soutien de l'élément de garniture est partiel, et non total. A titre indicatif, il est possible de prévoir au moins deux éléments de soutien local chacun en appui contre une des extrémités de la face frontale arrière de l'élément de garniture de chaque ensemble intermédiaire.

Dans un mode de mise en œuvre, ledit élément de soutien local de chaque ensemble intermédiaire s'étend à partir du plateau de fabrication. Alternativement ou en combinaison, ledit élément de soutien local de chaque ensemble intermédiaire est relié à la face frontale arrière de l'élément de garniture dudit ensemble et à la face frontale avant de l'élément de garniture de l'ensemble intermédiaire adjacent de la rangée, lesdites faces étant en regard l'une de l'autre. Dans une autre variante, ledit élément de soutien local de chaque ensemble intermédiaire est relié à la face frontale arrière de l'élément de garniture dudit ensemble et à la face frontale arrière de l'élément de garniture de l'ensemble intermédiaire adjacent de la rangée, lesdites faces étant en regard l'une de l'autre.

L'élément de garniture pour moule de pneumatique peut présenter une épaisseur comprise entre 0.25 et 6 millimètres.

L'invention concerne également un ensemble intermédiaire obtenu par mise en œuvre du procédé tel que défini précédemment.

La présente invention sera mieux comprise à la lecture de la description détaillée de modes de réalisation pris à titre d'exemples nullement limitatifs et illustrés par les dessins annexés sur lesquels :
- la figure 1 est une vue schématique en perspective illustrant partiellement un procédé de fabrication d'éléments de garniture selon un premier exemple de mise en œuvre,
- les figures 2 et 3 sont des vues de détail de la figure 1,
- les figures 4A à 5B sont des vues schématiques illustrant partiellement des étapes de séparation d'un procédé de fabrication d'éléments de garniture selon d'autres exemples de mise en œuvre,
- la figure 6 est une vue schématique en perspective illustrant partiellement un procédé de fabrication d'éléments de garniture selon encore un autre exemple de mise en œuvre, et
- la figure 7 est une vue de détail de la figure 6.

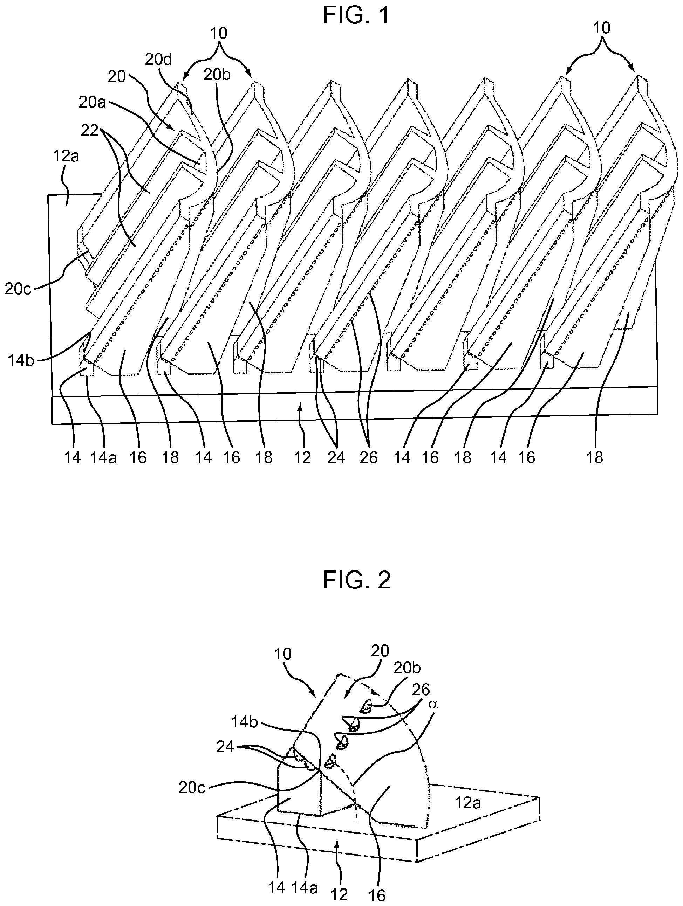

Sur la figure 1, est représenté un agencement d'éléments de garniture 10 identiques prévus pour être utilisés dans un moule de cuisson ou vulcanisation pour pneumatiques et formés sur un plateau de fabrication 12 représenté dans une position supposée horizontale.

Chaque élément de garniture 10 est associé à un support 14 interposé entre ledit élément et le plateau 12 de fabrication, et à des éléments de soutien 16, 18 local. Le support 14 est une pièce distincte des éléments de soutien 16, 18 local.

Comme cela sera décrit plus en détail par la suite, les éléments de garniture 10, les supports 14 et les éléments de soutien 16, 18 sont fabriqués par dépose et fusion sélective de couches de poudre empilées sur une surface de travail 12a du plateau de fabrication. Les éléments de garniture 10, les supports 14 et les éléments de soutien 16, 18 sont respectivement identiques entre eux.

Chaque élément de garniture 10 comprend un corps 20 qui est délimité par une face frontale 20a avant et par une face frontale 20b arrière opposée. Le corps 20 comprend également une base inférieure 20c et une surface d'extrémité supérieure 20d reliant lesdites faces. Les faces frontales 20a, 20b délimitent l'épaisseur du corps 20. La face frontale 20a avant forme une surface de moulage destinée à mouler tout ou partie de la surface de roulement du pneumatique. La face frontale 20b arrière est destinée à être en contact avec une autre partie du moule de cuisson sur lequel est rapporté l'élément de garniture 10. La face frontale 20b forme une surface d'ancrage de l'élément de garniture 10 sur ladite autre partie du moule de cuisson. Dans le cas d'un moule du type à secteurs, l'élément de garniture 10 est fixé sur un des secteurs du moule.

Dans l'exemple de réalisation illustré, chaque élément de garniture 10 comprend également une pluralité de protubérances 22 s'étendant en saillie à partir de la face frontale 20a de la base inférieure 20c à la surface d'extrémité supérieure 20d. Les protubérances 22 sont venues de matière avec le corps 20. Les protubérances 22 constituent des cordons destinés à mouler des rainures dans la bande de roulement du pneumatique. Chaque élément de garniture 10 peut également comprendre d'autres types de protubérances formant lamelles et destinées à mouler des incisions dans la bande de roulement du pneumatique.

Chaque élément de garniture 10 est fabriqué de façon inclinée par rapport au plateau 12 de fabrication. La face frontale 20b arrière forme un angle α (figure 2) avec le plateau 12 de fabrication compris entre 20° et 70°, et de préférence compris entre 30° et 60°. Dans l'exemple de réalisation illustré, la largeur de l'élément de garniture 10 s'étend selon une direction formant avec le plateau 12 l'angle a. En variante, il est possible de prévoir une orientation différente de chaque élément de garniture 10 de sorte que sa longueur s'étend selon une direction formant avec le plateau 12 un angle compris entre 20° et 70°, et de préférence comprise entre 30° et 60°. Toutefois, avec une telle orientation, la hauteur de l'élément de garniture 10 est augmentée.

Le support 14 est interposé entre l'élément de garniture 10 associé et le plateau 12 de fabrication. Le support 14 est relié d'un côté à la surface de travail 12a du plateau de fabrication et de l'autre côté à la base inférieure 20c de l'élément de garniture. Le support 14 comprend une base inférieure 14a reliée à la surface de travail du plateau 12 de fabrication et une surface d'extrémité supérieure 14b reliée à la base inférieure 20c de l'élément de garniture. Il n'existe aucun contact direct entre le plateau 12 de fabrication et la base inférieure 20c de chaque élément de garniture. La base inférieure 20c de chaque élément de garniture 10 repose entièrement sur le support 14. Le support 14 s'étend le long de la base inférieure 20c de l'élément de garniture associé. Le support 14 s'étend sur toute la longueur de la base inférieure 20c de l'élément de garniture associé.

Chaque élément de soutien 16, 18 associé à un élément de garniture 10 s'étend à partir de la surface de travail 12a du plateau de fabrication, et est relié à la face frontale 20b arrière dudit élément. Chaque élément de soutien 16, 18 s'étend uniquement à l'arrière de face frontale 20b de l'élément de garniture 10 associé contre laquelle il vient en appui. Chaque élément de soutien 16, 18 présente ici une hauteur sensiblement égale à celle de l'élément de garniture 10 associée de sorte à supporter ledit élément sur toute sa hauteur. Dans l'exemple de réalisation illustré, un élément de soutien 16 est prévu à chaque extrémité de la face frontale 20b de l'élément de garniture (un seul étant visible sur la figure), et deux éléments de soutien 18 sont disposés entre les éléments de soutien 16.

La figure 1 illustre une étape du procédé de fabrication des éléments de garniture 10. Ce procédé comprend une pluralité d'étapes successives de dépose de couches de poudre et d'agglomération par fusion sélective de la poudre. La poudre peut par exemple être métallique, plastique ou minérale, par exemple céramique.

Le procédé débute par une étape de dépose d'une première couche de poudre sur la surface de travail 12 du plateau de fabrication. Après dépose, la première couche s'étend sensiblement horizontalement sur la surface de travail 12a. Ensuite, une source énergétique (non représentée), par exemple du type laser, émet un faisceau énergétique dont l'orientation est contrôlée par des miroirs galvanométriques (non représentés). Une lentille optique (non représentée) permet de focaliser le faisceau énergétique afin de chauffer la couche de poudre selon un motif correspondant à la section du support 14 et des éléments de soutien 16, 18 associés à l'élément de garniture 10 à fabriquer, et ainsi de réaliser de manière sélective la fusion de la poudre.

Ces étapes sont à nouveau répétées dans chaque zone de la surface de travail 12a du plateau de fabrication pour former par empilage de couches fusionnées l'élément de garniture 10, le support 14 et les éléments de soutien 16, 18 associés.

Ainsi, lors du procédé, il est fabriqué sur le plateau 12 de travail une pluralité d'éléments intermédiaires comprenant chacun l'élément de garniture 10, le support 14 et les éléments de soutien 16, 18 associés qui sont rendus solidaires lors des étapes de fusion sélective des couches de poudre. Lors de la fabrication, l'élément de garniture 10, le support 14 et les éléments de soutien 16, 18 sont réalisés d'un seul tenant.

Les éléments de soutien 16, 18 permettent d'assurer le maintien en position de l'élément de garniture 10 associé en cours de fabrication. Ainsi, on limite le risque de déformations, notamment par flexion, lors du passage du dispositif de mise en couche et par diffusion de la chaleur lors des étapes de fusion, pouvant provoquer l'apparition de phénomènes de concentrations de contraintes et de microfissures. Le support 14 participe également au maintien en position de l'élément de garniture 10 lors de la fabrication.

Comme illustré plus visiblement à la figure 2, des perforations ou cavités 24 sont formées dans la zone de raccordement du support 14 avec l'élément de garniture associé. Cette zone de raccordement du support 14 est formée par la partie du support qui est adjacente à la base inférieure 20c de l'élément de garniture. Dans l'exemple de réalisation illustré, les cavités 24 débouchent sur la surface d'extrémité 14b supérieure du support. En variante, il pourrait être possible de prévoir des cavités 24 non débouchantes.

Des cavités 26 sont également formées dans la zone de raccordement de chaque élément de soutien 16, 18 avec l'élément de garniture associé. Cette zone de raccordement de l'élément de soutien est formée par la partie dudit élément qui est adjacente à la face frontale 20b arrière de l'élément de garniture. Les cavités 26 sont également débouchantes. En variante, il pourrait être possible de prévoir des cavités 24, 26 non débouchantes.

Les cavités 24, 26 sont formées lors des phases de fusion sélective des couches de poudre. Ces cavités 24, 26 forment des amorces de rupture destinées à faciliter la séparation ultérieure de l'élément de garniture 10 avec le support 14 et les éléments de soutien 16, 18. Afin de faciliter encore cette désolidarisation, les cavités 24, 26 sont de préférence formées sur toute la longueur de la zone de raccordement associée.

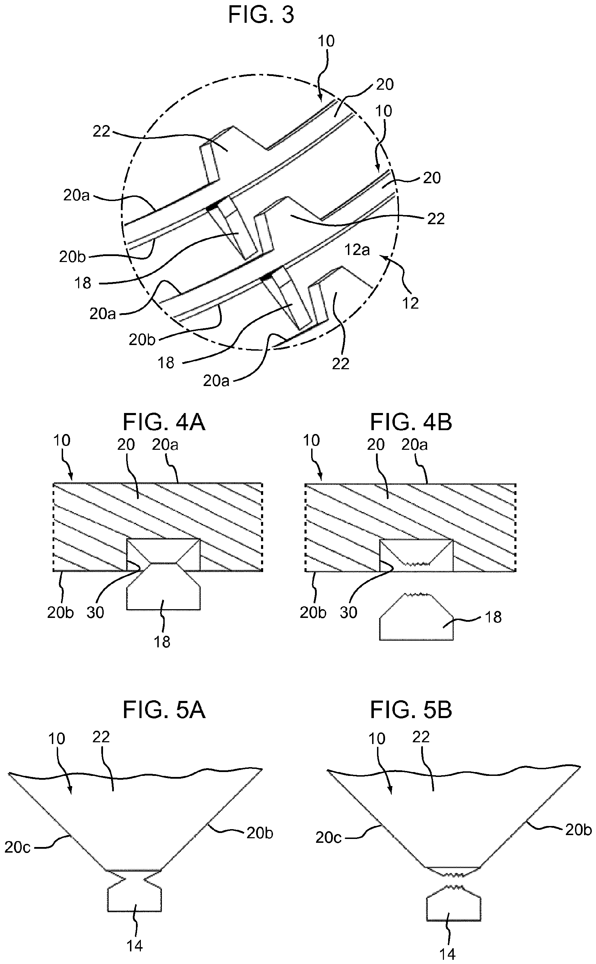

Après fabrication, les éléments intermédiaires, formés chacun par un élément de garniture 10 et le support 14 et les éléments de soutien 16, 18 associés, sont agencés sur le plateau 12 suivant une rangée. La réalisation inclinée des éléments de garniture 10 par rapport au plateau 12 de fabrication permet d'en fabriquer un nombre important. En outre, comme illustré plus visiblement à la figure 3, chaque élément de soutien 16, 18 local d'un élément de de garniture 10 est disposé et conformé de sorte à éviter tout contact avec les protubérances 22 de l'élément de garniture 10 immédiatement adjacent de la rangée. Cette disposition relative des éléments de garniture 10 permet de réduire l'écartement prévu entre eux et donc d'accroître encore le nombre d'éléments pouvant être fabriqués sur le plateau 12 de fabrication.

Après fabrication, chaque élément intermédiaire formé par l'élément de garniture 10 ainsi que le support 14 et les éléments de soutien 16, 18 associés est désolidarisé du plateau 12 de fabrication, par exemple par découpe par électro-érosion par fil. Chaque élément de garniture 10 peut ensuite être désolidarisé du support 14 et des éléments de soutien 16, 18 par cassure des zones de raccordement de ce support et de ces éléments de soutien avec ledit élément. Cette cassure peut être obtenue par tirage, pouvant par exemple être manuel, ou à nouveau par une opération de découpe par électro-érosion par fil. Le support 14 et les éléments de soutien 16, 18 associés à chaque élément de garniture 10 sont utilisés uniquement pour la fabrication dudit élément. En variante, il pourrait être possible de désolidariser l'élément de garniture 10 de chaque élément intermédiaire du support 14 et des éléments de soutien 16, 18 associés encore fixés au plateau 12 de fabrication. Après désolidarisation des éléments de garniture 10, les supports 14 et les éléments de soutien 16, 18 peuvent être détruits et le plateau de fabrication 12 resurfacé par usinage afin d'être utilisé à nouveau.

Comme indiqué précédemment, les amorces de rupture formées lors des phases de fusion sélective des couches de poudre dans les zones de raccordement du support 14 et des éléments de soutien 16, 18 avec l'élément de garniture 10 visent à faciliter leur séparation. Ces amorces de rupture permettent également de limiter les traces laissées sur l'élément de garniture 10 après cette désolidarisation et ainsi d'éviter de prévoir des opérations d'usinage ultérieures sur cet élément avant son montage dans le moule de pneumatique.

De sorte à limiter encore ces traces, il est possible dans un autre exemple de mise en œuvre illustré partiellement aux figures 4A et 4B, sur lesquelles les éléments identiques portent les mêmes références, de former localement sur la surface frontale 20b arrière de chaque élément de garniture 10 une pluralité de gorges 30 dédiées chacune au raccordement de l'un des éléments de soutien associés audit élément de garniture. La zone de raccordement de chaque élément de soutien est disposée à l'intérieur de la gorge 30 associée, ce qui permet d'éviter d'avoir des traces sur la surface frontale 20b arrière de l'élément de garniture 10. Ces éventuelles traces laissées par désolidarisation de l'élément de soutien sont situées en retrait de la surface frontale 20b et à l'intérieur de la gorge 30. La zone de raccordement de l'élément de soutien avec l'élément de garniture présente ici une forme chanfreinée de sorte à réduire localement l'épaisseur dudit élément de soutien et sa tenue mécanique pour faciliter la rupture ultérieure. Dans cet exemple, il est prévu des gorges uniquement sur la surface frontale arrière de chaque élément de garniture. Alternativement ou en combinaison, il pourrait également être possible de prévoir une telle gorge sur la base inférieure de chaque élément de garniture 10.

Dans une autre variante de mise en œuvre illustrée aux figures 5A et 5B, sur lesquelles les éléments identiques portent les mêmes références, une partie chanfreinée est ménagée entre la base inférieure 20c de l'élément de garniture et sa face frontale arrière 20b. Cette partie chanfreinée est reliée au support 14. La zone de raccordement du support 14 avec la base inférieure 20c de l'élément de garniture est reliée à cette partie chanfreinée de l'élément de garniture. Dans cet exemple, cette zone de raccordement présente également une forme chanfreinée.

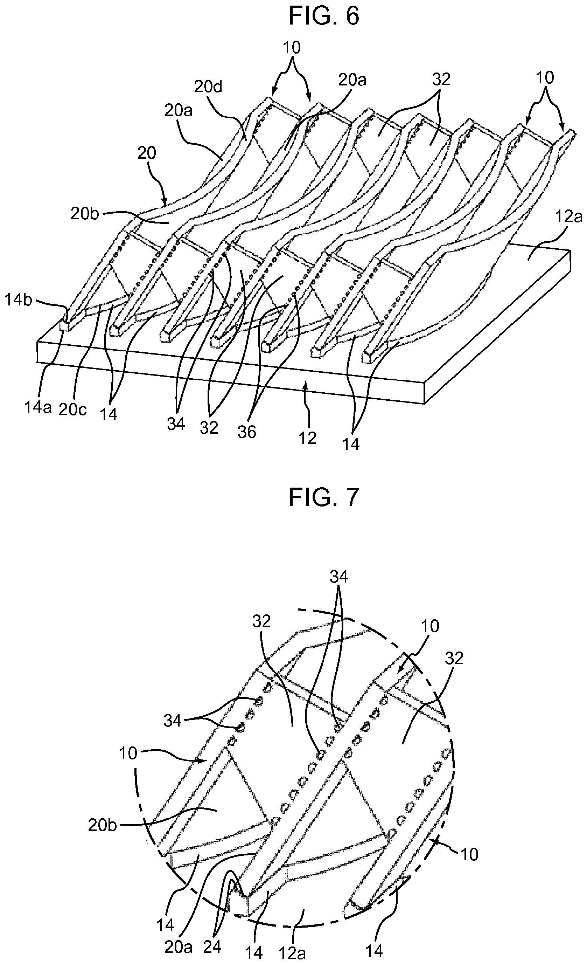

Dans les exemples de réalisation décrits précédemment, chaque élément de garniture 10 est soutenu localement par les éléments de soutien 16, 18 local qui sont reliés au plateau de fabrication 12. Dans l'exemple de mise en œuvre illustré aux figures 6 et 7, sur lesquelles les éléments identiques portent les mêmes références, chaque élément de garniture 10 est associé à des éléments de soutien 32 local reliés chacun à la face frontale arrière dudit élément et à la face frontale avant 20a en regard de l'élément de garniture 10 suivant. Il n'existe aucun contact direct entre les éléments de soutien 32 et le plateau de fabrication 12. Cet agencement des éléments de soutien 32 permet de réduire encore l'espace existant entre deux éléments de garniture 10 successifs et donc d'augmenter le nombre de pièces pouvant être fabriquées sur le plateau 12 de fabrication. Dans l'exemple de réalisation illustré, un élément de soutien 32 est prévu à chaque extrémité de la face frontale 20b arrière de l'élément de garniture associé.

Des cavités 34 sont formées dans la zone de raccordement de l'élément de soutien 32 avec chaque élément de garniture 10 associé. Pour chaque élément de soutien 32, les cavités 34 sont formées dans une première zone de raccordement formée par la partie de l'élément de soutien adjacente à la face frontale 20b arrière d'un élément de garniture, et dans une deuxième zone de raccordement formée par la partie dudit élément adjacente à la face frontale 20a avant de l'élément de garniture suivant.

Dans les exemples de réalisation illustrés, les éléments de garniture formés sur chaque plateau de fabrication sont identiques entre eux. En variante, il est possible de prévoir des protubérances différentes d'un élément de garniture à l'autre selon le type d'incisions à mouler dans la bande de roulement du pneumatique, ou encore des éléments de garniture de conception différentes et/ou présentant des hauteurs différentes sur un même plateau de fabrication.

Dans les exemples de réalisation illustrés, chaque élément de garniture repose sur un support qui est réalisé en une seule partie. Alternativement, il pourrait être possible sans sortir du cadre de l'invention de prévoir un support formé par une pluralité d'éléments espacés les uns par rapport aux autres et présentant chacun une forme optimisée de sorte à limiter la quantité de poudre utilisée.

L'invention a été décrite sur la base d'une fabrication par fusion laser d'un élément de garniture pour moule de vulcanisation de pneumatiques. L'invention peut également être appliquée à un autre élément de garniture du moule destiné à être rapporté sur un bloc support du moule.

## Revendications

1. Procédé de fabrication additive d'une pluralité d'éléments de garniture pour moule de pneumatique sur un plateau de fabrication par fusion de poudre à l'aide d'au moins un faisceau énergétique, chaque élément de garniture comprenant au moins deux faces frontales avant et arrière opposées délimitant l'épaisseur dudit élément de garniture et des protubérances s'étendant en saillie par rapport à sa face frontale avant, le procédé comprenant les étapes suivantes:
- a) fabrication simultanée par dépose et fusion sélective de couches de poudre empilées sur le plateau de fabrication d'une pluralité d'ensembles intermédiaires au moins suivant une rangée, chaque ensemble intermédiaire comprenant :
- un élément de garniture réalisé de façon inclinée par rapport au plateau de fabrication et formant un angle compris entre 20° et 70° avec ledit plateau,
- un support interposé entre le plateau de fabrication et une base inférieure dudit élément de garniture, et
- au moins un élément de soutien local en appui contre la face frontale arrière de l'élément de garniture, ledit élément de soutien local dudit ensemble étant disposé et conformé de sorte à éviter tout contact avec les protubérances de l'élément de garniture de l'ensemble intermédiaire adjacent de la rangée,
- les couches de poudre fusionnée de l'élément de garniture, du support et dudit élément de soutien local étant rendues solidaires les unes des autres lors de cette étape de fabrication,
- b) formation, lors des phases de fusion sélective de l'étape de fabrication, d'amorces de rupture dans des zones de raccordement du support et dudit élément de soutien avec ledit élément de garniture de chaque ensemble intermédiaire,
- c) séparation de l'élément de garniture avec le support et ledit élément de soutien local de chaque ensemble intermédiaire après l'étape de fabrication par cassure desdites zones de raccordement,
- au moins une gorge étant formée localement sur la face frontale arrière de l'élément de garniture de chaque ensemble intermédiaire et/ou sur la base inférieure dudit élément de garniture lors de l'étape de fabrication, la zone de raccordement dudit élément de soutien local avec ledit élément de garniture étant disposée à l'intérieur de ladite gorge.

2. Procédé selon la revendication 1, dans lequel les amorces de rupture comprennent une diminution locale d'épaisseur desdites zones de raccordement et/ou des cavités locales formées sur lesdites zones.

3. Procédé selon la revendication 1 ou 2, dans lequel une partie chanfreinée est ménagée entre la base inférieure dudit élément de garniture de chaque ensemble intermédiaire et sa face frontale arrière, la zone de raccordement du support avec ledit élément de garniture étant reliée à la partie chanfreinée.

4. Procédé selon l'une quelconque des revendications précédentes, dans lequel la zone de raccordement du support de chaque ensemble intermédiaire avec ledit élément de garniture et/ou la zone de raccordement dudit élément de soutien avec ledit élément de garniture présentent une densité inférieure à 98%.

5. Procédé selon l'une quelconque des revendications précédentes, dans lequel chaque ensemble intermédiaire comprend au moins deux éléments de soutien local chacun en appui contre une des extrémités de la face frontale arrière de l'élément de garniture.

6. Procédé selon l'une quelconque des revendications précédentes, dans lequel ledit élément de soutien local de chaque ensemble intermédiaire s'étend à partir du plateau de fabrication.

7. Procédé selon l'une quelconque des revendications précédentes, dans lequel ledit élément de soutien local de chaque ensemble intermédiaire est relié à la face frontale arrière de l'élément de garniture dudit ensemble et à la face frontale avant de de l'élément de garniture de l'ensemble intermédiaire adjacent de la rangée, lesdites faces étant en regard l'une de l'autre.

8. Procédé selon l'une quelconque des revendications précédentes, dans lequel l'élément de garniture présente une épaisseur comprise entre 0.25 et 6 millimètres.

## Patentansprüche

1. Verfahren zur additiven Fertigung einer Vielzahl von Einsatzelementen für eine Reifenform auf einer Platte zur Fertigung durch Pulverschmelzen mit Hilfe mindestens eines Energiestrahls, wobei jedes Einsatzelement mindestens zwei gegenüberliegende vordere und hintere Stirnseiten, die die Dicke des Einsatzelements bestimmen, und Ausstülpungen enthält, die sich bezüglich seiner vorderen Stirnseite vorstehend erstrecken, wobei das Verfahren die folgenden Schritte enthält:
a) gleichzeitige Fertigung durch selektives Auftragen und Schmelzen von Pulverschichten, die auf der Fertigungsplatte einer Vielzahl von Zwischeneinheiten zumindest gemäß einer Reihe gestapelt sind, wobei jede Zwischeneinheit enthält:
- ein Einsatzelement, das bezüglich der Fertigungsplatte geneigt hergestellt wird und einen Winkel zwischen 20° und 70° mit der Platte bildet,
- einen Träger, der zwischen die Fertigungsplatte und eine untere Basis des Einsatzelements eingefügt wird, und
- mindestens ein lokales Stützelement in Auflage gegen die hintere Stirnseite des Einsatzelements, wobei das lokale Stützelement der Einheit so angeordnet und gestaltet ist, dass jeder Kontakt mit den Ausstülpungen des Einsatzelements der benachbarten Zwischeneinheit der Reihe vermieden wird,
- wobei die Schichten geschmolzenen Pulvers des Einsatzelements, des Trägers und des lokalen Stützelements in diesem Fertigungsschritt fest miteinander verbunden werden,
b) Bildung, während der Phasen selektiven Schmelzens des Fertigungsschritts, von Sollbruchstellen in Anschlussbereichen des Trägers und des Stützelements an das Einsatzelement jeder Zwischeneinheit,
c) Trennung des Einsatzelements vom Träger und vom lokalen Stützelement jeder Zwischeneinheit nach dem Fertigungsschritt durch Brechen der Anschlussbereiche,
- wobei im Fertigungsschritt mindestens eine Rille lokal an der hinteren Stirnseite des Einsatzelements jeder Zwischeneinheit und/oder an der unteren Basis des Einsatzelements gebildet wird, wobei der Anschlussbereich des lokalen Stützelements an das Einsatzelement im Inneren der Rille angeordnet ist.

2. Verfahren nach Anspruch 1, wobei die Sollbruchstellen eine lokale Dickenverringerung der Anschlussbereiche und/oder der in den Bereichen gebildeten lokalen Hohlräume enthält.

3. Verfahren nach Anspruch 1 oder 2, wobei ein abgeschrägter Teil zwischen der unteren Basis des Einsatzelements jeder Zwischeneinheit und seiner hinteren Stirnseite vorgesehen ist, wobei der Anschlussbereich des Trägers an das Einsatzelement mit dem abgeschrägten Teil verbunden ist.

4. Verfahren nach einem der vorhergehenden Ansprüche, wobei der Anschlussbereich des Trägers jeder Zwischeneinheit an das Einsatzelement und/oder der Anschlussbereich des Stützelements an das Einsatzelement eine Dichte von weniger als 98% aufweist.

5. Verfahren nach einem der vorhergehenden Ansprüche, wobei jede Zwischeneinheit mindestens zwei lokale Stützelemente enthält, die je in Auflage gegen eines der Enden der hinteren Stirnseite des Einsatzelements sind.

6. Verfahren nach einem der vorhergehenden Ansprüche, wobei das lokale Stützelement jeder Zwischeneinheit sich ausgehend von der Fertigungsplatte erstreckt.

7. Verfahren nach einem der vorhergehenden Ansprüche, wobei das lokale Stützelement jeder Zwischeneinheit mit der hinteren Stirnseite des Einsatzelements der Einheit und mit der vorderen Stirnseite des Einsatzelements der benachbarten Zwischeneinheit der Reihe verbunden ist, wobei die Seiten einander gegenüberliegen.

8. Verfahren nach einem der vorhergehenden Ansprüche, wobei das Einsatzelement eine Dicke zwischen 0,25 und 6 Millimeter aufweist.

## Claims

1. Method for the additive manufacture of a plurality of components on a manufacturing support plate by melting powder using at least one beam of energy, each component comprising at least two opposite front and rear frontal faces delimiting the thickness of the said component and protrusions projecting out from the front frontal face thereof, the method comprising the following steps:
- a) simultaneous manufacture, by deposition and selective melting of layers of powder stacked on the manufacturing support plate, of a plurality of intermediate assemblies at least in one row, each intermediate assembly comprising:
- a component produced at an inclined angle with respect to the manufacturing support plate and forming an angle of between 20° and 70° with the said support plate,
- a support interposed between the manufacturing support plate and a lower base of the said component, and
- at least one local supporting element resting against the rear frontal face of the component, the said local supporting element of the said assembly being arranged and configured in such a way as to avoid any contact with the protrusions of the component of the adjacent intermediate assembly of the row,
- the fused powder layers of the component, of the support and of the said local supporting element being joined to one another during this manufacturing step,
- b) formation, during the selective-melting phases of the manufacturing step, of rupture initiators in regions of connection of the support and of the said supporting element to the said component of each intermediate assembly,
- c) separation of the component from the support and the said local supporting element of each intermediate assembly after the manufacturing step by breaking of the said connecting regions.
- at least one groove is formed locally on the rear frontal face of the component of each intermediate assembly and/or on the lower base of the said component during the manufacturing step, the region of connection of the said local supporting element to the said component being positioned inside the said groove.

2. Method according to Claim 1, in which the rupture initiators comprise a local reduction in the thickness of the said connecting zones and/or local cavities formed in the said zones.

3. Method according to Claim 1 or 2, in which a chamfered part is formed between the lower base of the component of each intermediate assembly and the rear frontal face thereof, the region of connection of the support to the said component being connected to the chamfered part.

4. Method according to any one of the preceding claims, in which the region of connection of the support of each intermediate assembly to the said component and/or the region of connection of the said supporting element to the said component have a density of less than 98%.

5. Method according to any one of the preceding claims, in which each intermediate assembly comprises at least two local supporting elements each one resting against one of the ends of the rear frontal face of the component.

6. Method according to any one of the preceding claims, in which the said local supporting element of each intermediate assembly extends from the manufacturing support plate.

7. Method according to any one of the preceding claims, in which the said local supporting element of each intermediate assembly is connected to the rear frontal face of the component of the said assembly and to the front frontal face of the component of the adjacent intermediate assembly of the row, the said faces facing one another.

8. Method according to any one of the preceding claims, in which the component of each intermediate assembly is a lining element for a tyre mould having a thickness of between 0.25 and 6 millimetres.
